# EUROPEAN PATENT APPLICATION

(11) **EP 1 037 441 A2**
(43) Date of publication of application: **20.09.2000**
(21) Application number: 00105407.1
(22) Date of filing: 14.03.2000
(51) Int. Cl.: H04L 27/26

(54) **OFDM signal processor performing digital delay**

(30) Priority: 18.03.1999 JP 7349099
(71) Applicant: KABUSHIKI KAISHA TOSHIBA, Kawasaki-shi, Kanagawa-ken 210-8572 (JP)
(72) Inventor: Hirakura, Takao, K.K. Toshiba, Intel.Prop.Division, Minato-ku,Tokyo 105-8001 (JP); Isobe, Seiji, K.K. Toshiba, Intel.Prop.Division, Minato-ku,Tokyo 105-8001 (JP); Sawada, Takeshi, K.K. Toshiba, Intel.Prop.Division, Minato-ku,Tokyo, 105-8001 (JP)
(74) Representative: Henkel, Feiler, Hänzel

(57) **Abstract**

An orthogonal frequency division multiplex (OFDM) signal processor comprising A/D converter 12 to receive OFDM signals, and perform digital signal conversion of them, memory element (13) to store in the memory area the OFDM digital signals for predetermined time set from the outside, and read them out again, and D/A converter 14 to convert the read out OFDM digital signals to OFDM analog signals.

## Description

The present invention is a signal processor, relating to an orthogonal frequency division multiplex (hereafter, called as OFDM) signal processor to output an OFDM signal as an analog OFDM signal with arbitrary delay time by a semiconductor memory.

An OFDM method has recently drawn considerable attention as a modulation demodulation method of a new standard. Broadcasting service using the OFDM method may provide a single frequency network (SFN), wherein receiving stations receive radio waves from a plurality of transmission towers, and time differences between radio waves are required to be as small as within guard intervals, and transmit OFDM signals with predetermined delay time for transmission towers respectively to the towers from a modulator.

However, the quantity of the delay time is needed to be several microseconds or more in this case, and, the adjustment of the delay time according to circumstances is required. But, there has been a problem that analog delay lines have difficulty in adjusting the delay time of the order of microseconds, and cause large signal degradation.

The present invention has been made in consideration of the above circumstances, and the object of the invention is to provide an OFDM signal processor to eliminate time differences between a plurality of transmission towers through arbitrary delay time of OFDM signals by using a semiconductor memory, and an OFDM signal transmitter comprising the same.

The present invention is an OFDM signal processor comprising: digital signal conversion means (11,12,16) for receiving OFDM signals of an analog signal, perform digital signal conversion of them, and output OFDM digital signals; memory means (13) for storing in the memory area OFDM digital signals from the digital signal conversion means for predetermined time set from the outside, and read them out again; and analog signal conversion means (14,15,19) for performing analog signal conversion of digital OFDM signals read out from the memory element, and output delayed analog OFDM signals.

The OFDM signal transmitter of the present invention is able precisely to eliminate time differences between a plurality of transmission towers, and achieves remarkably better precision and operation than those of analog delay.

This summary of the invention does not necessarily describe all necessary features so that then invention may also be a sub-combination of these described features.

This invention can be more fully understood from the following detailed description when taken in conjunction with the accompanying drawings, in which:
FIG. 1 shows a block diagram of a delay apparatus of OFDM signals according to the present invention.
FIG. 2 shows a schematic view of a transmission system comprising a delay apparatus of OFDM signals according to the present invention.
FIG. 3 shows a block diagram of an OFDM signal transmitter with a delay function of OFDM signals according to the present invention.

Details of one of embodiments of the invention will be described below, referring to drawings.

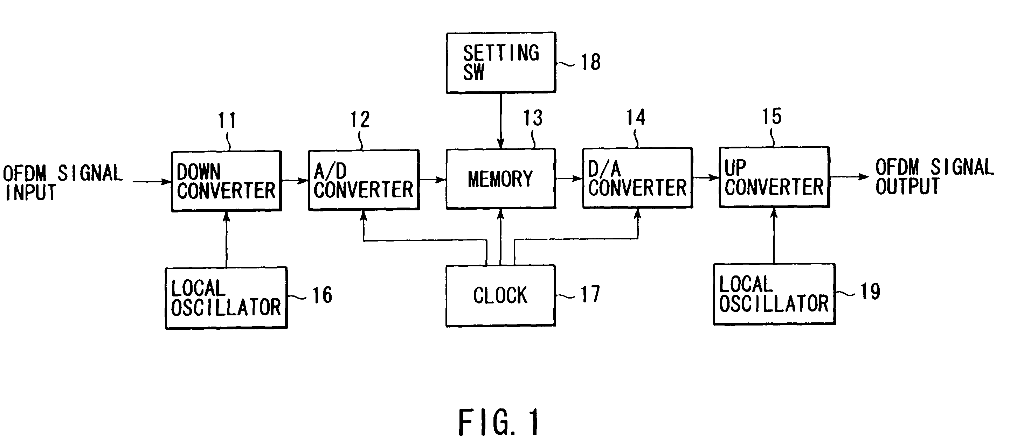

FIG. 1 shows a block diagram of a delay apparatus of OFDM signals according to the present invention. In FIG. 1, the delay apparatus comprises: a down-converter 11; a local oscillator 16 connected to the down-converter; an A/D converter 12; a memory 13; a clock oscillator 17 to provide a clock signal of a predetermined frequency to the memory; a setting switch (SW) 18 to have digital data provided from the outside corresponding to a predetermined delay time to the memory 13; a D/A converter 14 to perform analog conversion of signals from the memory 13; an up-converter 15 connected to the D/A converter; and a local oscillator 19 connected to the up-converter.

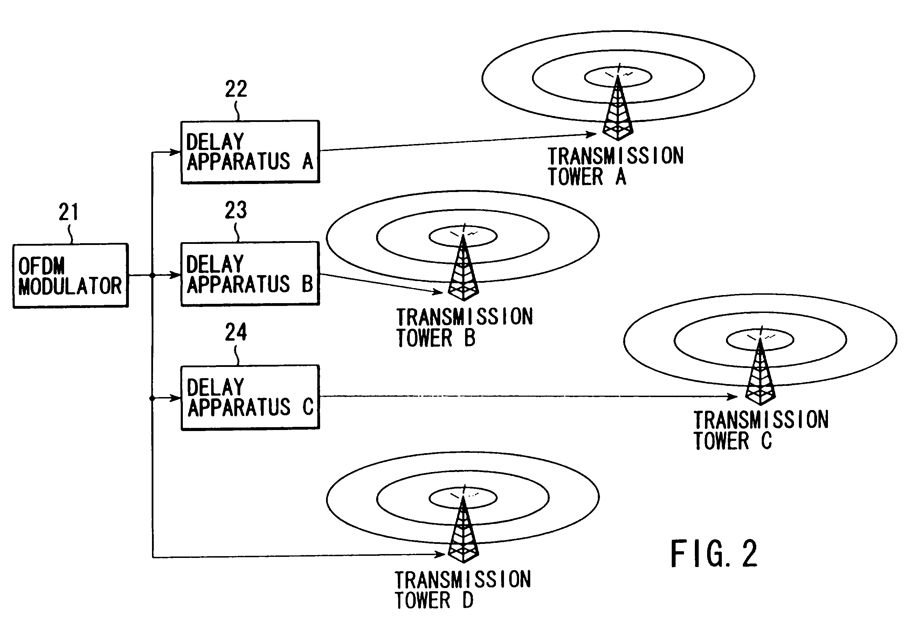

FIG. 2 shows a schematic view of a transmission system comprising a delay apparatus of OFDM signals. In FIG. 2, required number of the delay apparatuses described in FIG. 1 are connected to a OFDM modulator 21. In FIG. 2, transmission towers A-C are connected to the OFDM modulator 21 through corresponding delay apparatuses A-C, 22-24, respectively, and a transmission towers D to the modulator 21, directly without a delay apparatus, as the tower D is at the greatest distance.

The detail of the operation of the present invention will be described below, referring to FIG. 1 and FIG. 2.

Firstly, an OFDM signal is applied to the delay apparatuses A-C, 22-24, respectively, from the connected OFDM modulator 21. The OFDM signal is applied to the down-converter 11 for down-conversion, based on clock signals from the local oscillator 16, to a baseband signal. Secondly, the baseband signal is applied to the A/D converter for A/D conversion to digital data. Arbitrary delay processing of the digital data is performed by the memory 13 [[Translator's comment: the original "18" should be corrected to "13"]], according to values given from the setting SW 18. That is, the digital data are output after performing required delay processing by storing the digital data for set delay time and reading them out. And the digital data with required delay time are applied to the D/A converter 14 for D/A conversion to an analog signal. Finally, the analog signal is output after up-conversion.

In the method of the present invention, the delay processing is performed after conversion of OFDM signals into digital data to cause more accurate setting of delay time than the case of analog signals, and there is no change in degradation quantity of the signals even with change of delay quantity. The digital processing causes easy change in delay time.

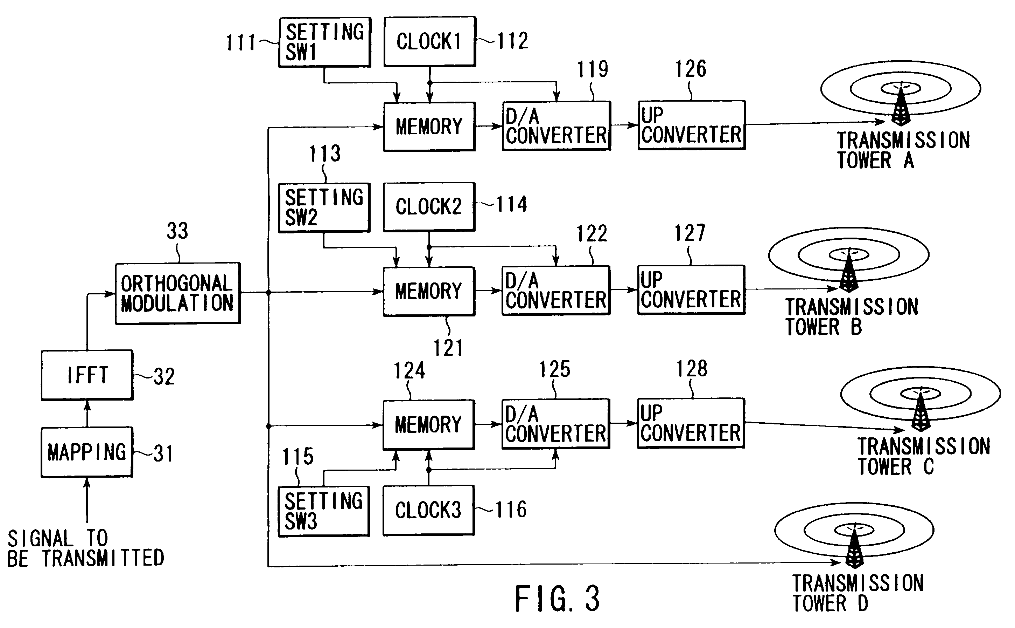

Moreover, the details of one embodiment of OFDM signal transmitters incorporating a plurality of functions of the above digital delay apparatus of the present invention will be described below. FIG. 3 shows a block diagram of an OFDM signal transmitter with a delay function of OFDM signals according to the present invention.

In FIG. 3, the OFDM signal transmitter comprises: a mapping circuit 31 to which signals to be transmitted are applied; an inverse fast Fourier transform (hereafter, called as IFFT) circuit 32; an orthogonal modulation circuit 33; a plurality of memories 118, 121, 124 connected to the modulation circuit; D/A converters 119, 122, 125 connected to the memories respectively; clock oscillators 1-3, 112, 114 [[Translator's comment: the original "121" should be corrected to 114)]], 116 to apply clock signals to those memories and D/A converters; dip switches, setting SWs, 1-3, 111, 113, 115, respectively to set the required delay time from the outside according to the memories; and up-converters 126-128 respectively to up-convert outputs from the D/A converters.

In the configuration such as the above, signals to be transmitted are applied to the IFFT circuit 32, after the signals are mapped by a mapping circuit 31 to signal points on the complex planes according to modulation methods of carriers. The IFFT circuit 32 generates effective symbol interval signals by converting signals to be transmitted for one symbol to the time domain after IFFT processing of the signals, and has a function to generate baseband OFDM signals by adding the rear part of effective symbol interval signals before the effective symbol interval signals as guard interval signals for each symbol. Then, the generated baseband OFDM signals are applied to the orthogonal modulation circuit 33. The orthogonal modulation circuit 33 converts the frequency of the baseband OFDM signals to signals having an intermediate frequency (IF) band by orthogonal modulation of the baseband OFDM signals.

Here, delay processing of the frequency-converted OFDM signals is performed by the memories 118, 121, 124, respectively. In order to adjust the delay time according to the location of the transmission towers A-D (there is no delay apparatus for the transmission tower D, as the tower is at the greatest distance, and delay processing at the tower is not performed.), the delay time given from the dip switches 1-3, 111, 113, 115 is set in the memories 118, 121, 124, respectively. Thereby, digital signals with required delay time are converted into analog signals by the D/A converters 119, 122, 125, respectively. And, the OFDM signals in an IF band are converted to signals in a radio frequency (RF) band by the up-converters 126-128, and the frequency-converted signals are output from the transmission towers A-C, respectively.

As mentioned above, it has become possible to achieve more accurate signal delay processing through delay processing of digital signals to provide an OFDM signal transmitter capable of eliminating minute differences in the delay time between a plurality of the transmission towers A-D.

The present invention is not limited to the above-mentioned embodiments. Naturally, it covers various variants and generalizations accessible to the person skilled in the art according to the scope of the invention. For example, it is possible to apply the OFDM signal processor to various types of digitally modulated signals other than OFDM signals.

As mentioned above, it is possible to provide OFDM signals with arbitrary delay time with the minimum signal degradation and achieve realization of SFN by the OFDM signal processor.

Moreover, the OFDM signal transmitter with the delay processing function has the same effects.

## Claims

1. An orthogonal frequency division multiplex (OFDM) signal processor comprising:
digital signal conversion means (11, 12, 16) for receiving OFDM signals of an analog signal, performing digital signal conversion of them, and outputting OFDM digital signals;
memory means (13) for storing in the memory area OFDM digital signals from the digital signal conversion means for predetermined time set from the outside, and reading them out again; and
analog signal conversion means (14, 15, 19) for performing analog signal conversion of digital OFDM signals read out from the memory means, and outputting delayed analog OFDM signals.

2. An OFDM signal processor according to claim 1, characterized in that the digital signal conversion means includes
down-conversion means (11) for receiving the OFDM digital signals of an analog signal, and down-converting them; and
digital signal conversion means (12) for converting the OFDM signals down-converted by the down-conversion means to digital signals;
wherein the analog signal conversion means includes up-conversion means (15) for up-converting the OFDM signals converted to analog signals by the analog signal conversion means.

3. An OFDM signal processor according to claim 1, characterized in that the memory means includes
dip switch element(18); and
memory means (13) to store in the memory area digital signals from the digital signal conversion means for the predetermined delay time set by the dip switch element.

4. An OFDM signal processor according to claim 1, characterized by further comprising;
mapping means (31) for receiving signals to be transmitted, and performing mapping processing of them;
IFFT processing means (32) for performing IFFT processing of the mapping-processed signals to be transmitted; and
orthogonal modulation means (33) for performing orthogonal modulation of the IFFT-processed signals, outputting the OFDM signals, and applying them to the digital conversion means.

5. An OFDM signal processor according to claim 1, characterized by further comprising;
mapping means (31) for receiving signals to be transmitted, and performing mapping processing of them;
IFFT processing means (32) for performing IFFT processing of the mapping-processed signals to be transmitted;
orthogonal modulation means (33) for performing orthogonal modulation of the IFFT-processed signals, *utputting the OFDM signals, and applying them to the digital signal conversion means;
means (22) for applying the delayed OFDM analog signals from the analog signal conversion means to a first transmission tower (A); and
means (21) for applying the OFDM signals applied from the orthogonal modulation means without any delay to a second transmission tower (D) different from the first transmission tower.

6. An OFDM signal processor according to claim 1, characterized by further comprising:
mapping means (31) for receiving signals to be transmitted, and performing mapping processing of them;
IFFT means (32) for performing IFFT processing of the mapping-processed signals to be transmitted;
orthogonal modulation means (33) for performing orthogonal modulation of the IFFT-processed signals, *utputting the OFDM signals, and applying them to the digital signal conversion means;
second digital signal conversion means (11, 12, 16) for receiving the OFDM signals of an analog signal from the orthogonal modulation means, performing digital signal conversion of them, and outputting OFDM digital signals;
second memory means (13) for storing in the memory area the OFDM digital signals from the second digital signal conversion means for second predetermined time which is set from the outside, and different from the predetermined time of the first memory means; and
second analog signal means (14, 15, 19) for performing analog signal conversion of the OFDM digital signals read out from the second memory means, and outputting delayed second analog OFDM signals.

7. An OFDM signal processor according to claim 1, characterized by further comprising:
mapping means (31) for receiving the signals to be transmitted, and performing mapping processing of them;
IFFT means (32) for performing IFFT processing of the mapping-processed signals to be transmitted;
orthogonal modulation means (33) for performing orthogonal modulation of the IFFT-processed signals, outputting the OFDM signals, and applying them to the digital signal conversion means;
means (22) for applying the delayed OFDM analog signals from the analog signal conversion means to a first transmission tower (A);
second digital signal conversion means (11, 12, 16) for receiving the OFDM signals of a analog signal from the orthogonal modulation means, performing digital signal conversion of them, and outputting OFDM signals;
second memory means (13) for storing in the memory area the OFDM digital signals from the second digital signal conversion means for second predetermined time which is set from the outside, and different from the predetermined time of the first memory means;
second analog signal means (14, 15, 19) for performing analog signal conversion of the OFDM digital signals read out from the second memory means, and outputting second analog OFDM signals with delay time of the second predetermined time;
means (22) for applying the delayed OFDM analog signals from the second analog signal conversion means to a second transmission tower (B) different from the first transmission tower (A); and
means (21) for applying the OFDM signals applied from the orthogonal modulation means without any delay to a third transmission tower (D) different from the second transmission tower.
